# EUROPÄISCHE PATENTSCHRIFT

(11) **EP 3 258 296 B1**
(45) Veröffentlichungstag und Bekanntmachung des Hinweises auf die Patenterteilung: **26.07.2023**
(21) Anmeldenummer: 16174419.8
(22) Anmeldetag: 14.06.2016
(51) Int. Cl.: G01V 3/12, G01V 8/00, G01F 23/284, G01S 13/34, G01S 13/88

(54) **REFLEXIONSMIKROWELLENSCHRANKE**
REFLECTION MICROWAVE BARRIER
BARRIERE DE MICRO-ONDES DE REFLEXION

(43) Veröffentlichungstag der Anmeldung: 20.12.2017
(73) Patentinhaber: VEGA Grieshaber KG, 77709 Wolfach (DE)
(72) Erfinder: WELLE, Roland, 77756 Hausach (DE); WÄLDE, Steffen, 78078 Niedereschach (DE); GRIESSBAUM, Karl, 77796 Mühlenbach (DE)
(74) Vertreter: Maiwald GmbH

(56) Entgegenhaltungen:
- EP-A1- 1 128 169
- WO-A2-02/27349
- US-A1- 2005 044 952
- US-A1- 2012 056 774

## Beschreibung

### Gebiet der Erfindung

Die Erfindung betrifft die Grenzstandüberwachung in mindestens einem Arbeitsbereich einer Mikrowellenschranke. Insbesondere betrifft die Erfindung eine Reflexionsmikrowellenschranke zur Grenzstandüberwachung in einem Arbeitsbereich der Reflexionsmikrowellenschranke, ein Verfahren zur Grenzstandüberwachung in einem Arbeitsbereich einer Mikrowellenschranke, ein Programmelement, ein computerlesbares Medium und eine Verwendung für eine Reflexionsmikrowellenschranke in einem Stellwerk.

### Hintergrund

Die grundlegende Funktionsweise einer Mikrowellenschranke ist beispielsweise aus der DE 33 02 731 A1 bekannt. Ein Sender sendet ein Dauerstrich-Mikrowellensignal in Richtung eines zugehörigen Empfängers aus. Wird der direkte Übertragungsweg vom Sender zum Empfänger durch ein Zielobjekt oder durch den Füllstand in einem Behälter unterbrochen, macht sich dies durch einen fehlenden oder reduzierten Empfangspegel im Empfänger bemerkbar. Der Abfall des Empfangspegels wird im Empfänger detektiert und in ein Schaltsignal umgewandelt. Mit solch einer einfachen Anordnung lässt sich jedoch beispielsweise nicht verhindern, dass beispielsweise durch Verschmutzung des Mikrowellensenders oder des Mikrowellenempfängers fälschlicherweise ein physisch nicht vorhandenes Zielobjekt detektiert wird, da auch durch Verschmutzungen der Empfangspegel, also die Amplitude des empfangenen Mikrowellensignals, absinken kann. Gerade in industriellen Anwendungen kann beispielsweise durch Staubablagerungen in zerspanenden Anwendungen oder Rußablagerungen in Anwendungen mit Rauchentwicklung eine entsprechende Verschmutzung sich als unvermeidlich erweisen, wodurch bisweilen erhebliche prozesstechnische Störungen verursacht werden.

Um eine solche fehlerhafte Detektion ("false positive") zu vermeiden, ist es beispielsweise möglich, Mikrowellensender und Mikrowellenempfänger regelmäßigen Wartungen zu unterziehen. Beispielsweise kann eine Mikrowellenantenne durch Fachpersonal auf Verschmutzung untersucht und gegebenenfalls gereinigt werden. Auch eine automatische Reinigung ist denkbar, gegebenenfalls unter Verwendung von Überwachungsmitteln wie Kameras, welche Verschmutzungen oder sonstige Ablagerungen im Bereich des Mikrowellensenders oder Mikrowellenempfängers detektieren und signalisieren.

Diese Lösung erfordert jedoch zusätzlichen Aufwand, entweder in Form von Personal oder in Form von technischen Vorrichtungen zur Detektion und Entfernung von Verschmutzungen. Beide Möglichkeiten erzeugen außerdem zusätzlich weitere potentielle Fehlerquellen. Es wäre daher eine Mikrowellenschranke zur Grenzstandüberwachung wünschenswert, bei welcher Verschmutzungen möglichst frei von Auswirkungen bleiben.

Die US 2005/0044952 A1 und die US 2012/0056774 A1 zeigen Geräte zur Füllstandmessung. Weiterhin ist aus der EP 1 128 169 A1 eine Vorrichtung und ein Verfahren zur Bestimmung eines Grenzbestands eines Füllguts in einem Behälter bekannt.

### Zusammenfassung der Erfindung

Es ist eine Aufgabe der Erfindung, eine Mikrowellenschranke anzugeben, welche weitgehend unempfindlich gegenüber Verschmutzungen des Mikrowellensenders und des Mikrowellenempfängers ist.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der Erfindung betrifft eine Reflexionsmikrowellenschranke zur Grenzstandüberwachung in mindestens einem dieser Mikrowellenschranke zugeordneten Arbeitsbereich. Dabei wird der Grenzstand durch Ausgabe eines Schaltsignals überwacht, es wird also ein Schaltsignal ausgelöst, wenn ein Füllstand einen Grenzstand erreicht oder überschreitet. Dabei kann das Füllgut beispielsweise in einem Behältnis gelagert sein. Es ist ein Mikrowellensender zum kontinuierlichen Aussenden eines zeitlich modulierten Mikrowellensignals, sowie ein Mikrowellenempfänger zum Empfang einer Reflexion des Mikrowellensignals vorgesehen. Sender und Empfänger können dabei auch in einem Bauteil, beispielsweise als Transceiver ausgebildet sein. Der Empfänger ist auf der gleichen Seite des Arbeitsbereichs angeordnet wie der Mikrowellensender, so dass er nicht unmittelbar das ausgesendete Mikrowellensignal empfängt, sondern Reflexionen desselben. Eine mit dem Mikrowellenempfänger kommunizierende Steuereinheit detektiert und überwacht kontinuierlich Echosignale in der empfangenen Reflexion des Mikrowellensignals. Die Steuereinheit ist beispielsweise dazu eingerichtet, insbesondere bei Entstehen oder Ansteigen der Amplitude eines Echosignals dessen Laufzeit zu berechnen, mittels der berechneten Laufzeit zu bestimmen, ob der Ursprung des Echosignals innerhalb des mindestens einen Arbeitsbereichs liegt, und nur in diesem Falle das Schaltsignal auszugeben.

Die Steuereinheit ist alternativ und/oder ergänzend dazu eingerichtet, die Laufzeit eines Echosignals zu berechnen, mittels der berechneten Laufzeit zu bestimmen, ob der Ursprung des Echosignals innerhalb des mindestens einen Arbeitsbereichs liegt, und nur in diesem Falle das Schaltsignal auszugeben.

Die zeitliche Modulation des Mikrowellensignals dient dazu, eine Laufzeitbestimmung desselben zu erlauben. Denkbar ist beispielsweise ein amplitudenmoduliertes Signal wie ein Pulszug oder beispielsweise ein frequenzmoduliertes Signal wie ein FMCW-Signal (Frequency Modulated Continuous Wave).

Der Begriff der Reflexion des Mikrowcllcnsignals umfasst jegliche Strahlung, die zurück in Richtung des Mikrowellenempfängers reflektiert oder gestreut wird. Das Echosignal dient als Nachweis dafür, dass sich in Ausbreitungsrichtung der Welle ein Hindernis befindet. Aus den Eigenschaften des Echosignals (Stärke, Phasenlage, Frequenzspektrum) kann auf Eigenschaften des Hindernisses geschlossen werden. Unter dem Begriff des Ursprungs des Echosignals ist der Ort zu verstehen, an dem das Mikrowellensignal reflektiert wurde. Durch Kenntnis oder unter Annahme des Mediums (beispielsweise Luft) entlang des Pfades des Mikrowellensignals lässt sich aus der bekannten Laufzeit des Echos die Laufstrecke und somit der Ursprung errechnen. Mit einem Mikrowellensignal ist elektromagnetische Strahlung gemeint, vorzugsweise mit einer Wellenlänge im Bereich von 10µm bis 10cm.

Die Reflexionsmikrowellenschranke hat unter anderem den Vorteil, dass es ausgeschlossen ist, dass das Schaltsignal durch Verschmutzungen ausgelöst werden kann, welche ein Mikrowellensignal prinzipiell abschwächen. Erfindungsgemäß wird stattdessen ein Entstehen oder Ansteigen eines Mikrowellensignals, nämlich eines Echosignals, als notwendiges Kriterium zur Ausgabe des Schaltsignals gewählt.

Außerdem ist als Vorteil anzusehen, dass dadurch, dass Sender und Empfänger auf der gleichen Seite angeordnet sind, die Justage der Reflexionsmikrowellenschranke vereinfacht wird, da Sender und Empfänger nicht an zwei Orten aufeinander abgestimmt werden müssen.

Ein weiterer Vorteil besteht darin, dass die vorgeschlagene Anordnung ohne statischen Gegenreflektor auskommt. Die Reflexion des Mikrowellensignals geschieht am zu detektierenden Zielobjekt oder beispielsweise an dem Füllgut, wenn es den Füllstand erreicht oder beispielsweise überschreitet.

Gemäß einer Ausführungsform der Erfindung ist die Steuereinheit dazu eingerichtet, zu bestimmen, ob der Ursprung des Echosignals innerhalb des mindestens einen Arbeitsbereichs liegt, indem sie überprüft, ob die Laufzeit größer ist als mindestens eine vordefinierte Minimallaufzeit.

Dadurch wird erreicht, dass der Arbeitsbereich ausgehend vom Mikrowellensender erst ab einer vordefinierten Distanz entlang der Ausbreitungsrichtung des Mikrowellensignals beginnt. Somit ist es möglich, Fremdkörper, die sich innerhalb dieses durch die mindestens eine vordefinierte Minimallaufzeit festgelegten Abschnitts befinden, bei der Erkennung von Zielobjekten oder der Überschreitung eines zu überwachenden Füllstands zu ignorieren. Diese Fremdkörper könnten beispielsweise Personen sein, welche sich zwischen einem Mikrowellentransmitter und einem Behältnis für Füllgut bewegen, oder in Form von Verschmutzungen im Bereich des Senders oder Empfängers vorliegen. Klassische Reflexionsmikrowellenschranken überwachen hingegen durch das Aussenden und Empfangen von Mikrowellensignalen einen zunächst lediglich durch die Mikrowellenleistung begrenzten Arbeitsbereich. Dabei ist es im Allgemeinen nicht möglich, die Überwachung lediglich auf einem Teilbereich der Strecke zwischen der Mikrowellenschranke und dem Reflektor zu begrenzen.

Außerdem machen Verschmutzungen der Mikrowellenschranke sich durch Echos im Nahbereich bemerkbar. Diese Echos können durch Verwendung des vordefinierten Minimallaufzeit herausgefiltert und entfernt werden.

Gemäß einer Ausführungsform der Erfindung ist die Steuereinheit dazu eingerichtet, zu bestimmen, ob der Ursprung des Echosignals innerhalb des mindestens einen Arbeitsbereichs liegt, indem sie überprüft, ob die Laufzeit kleiner ist als mindestens eine vordefinierte Maximallaufzeit.

Dadurch wird erreicht, dass sich der Arbeitsbereich nur bis zu einer vordefinierten Distanz entlang der Ausbreitungsrichtung des Mikrowellensignals erstreckt. Somit ist es möglich, Objekte, die sich hinter dieser durch die mindestens eine vordefinierte Maximallaufzeit festgelegten Distanz befinden, bei der Erkennung von Zielobjekten oder des Füllstands zu ignorieren. Diese Objekte könnten beispielsweise Personen sein, welche sich hinter einem Behältnis für Füllgut bewegen, oder in Form von Verschmutzungen hinter einem solchen Behältnis vorliegen. Klassische Reflexionsmikrowellenschranken überwachen hingegen einen zunächst lediglich durch die Mikrowellenleistung begrenzten Arbeitsbereich, wobei es im Allgemeinen nicht möglich ist, die Überwachung lediglich auf einem Teilbereich der Strecke zwischen der Mikrowellenschranke und dem Reflektor zu begrenzen.

Dabei ist beispielsweise eine jede Maximallaufzeit einer Minimallaufzeit zugeordnet. Somit bilden jeweils eine Minimallaufzeit und eine dieser zugeordnete Maximallaufzeit ein zeitliches Intervall, welches genau einem räumlichen Arbeitsbereich entspricht. Wenn eine Minimallaufzeit gleich Null gewählt ist, kann auf die darauf gerichtete Überprüfung verzichtet werden, da eine jede Laufzeit zwangsläufig größer Null ist. Wenn in der Steuereinheit keine Routine zu der Überprüfung einer Minimallaufzeit hinterlegt ist, gleicht dies somit effektiv der Überprüfung einer Minimallaufzeit gleich Null.

Gemäß einer Ausführungsform der Erfindung sind mindestens zwei entlang einer Ausbreitungsrichtung des Mikrowellensignals getrennte Arbeitsbereiche vorgesehen.

Dabei wird ein jeder Arbeitsbereich durch jeweils genau eine Minimallaufzeit und jeweils genau eine Maximallaufzeit begrenzt. Die Minimallaufzeit kann dabei gleich Null sein. Die Maximallaufzeit kann gleich einer Entfernung eines Reflektors, falls vorhanden, oder beliebig höher als die Minimallaufzeit sein. Es ist auch möglich, für den entlang der Senderichtung des Mikrowellensenders letzten Arbeitsbereich keine Maximallaufzeit vorzusehen, so dass dieser durch die Leistung der Mikrowellenstrahlung begrenzt ist. Der Vorteil von der Verwendung von mindestens zwei Arbeitsbereichen kann darin gesehen werden, dass es möglich ist, durch eine einzelne Mikrowellenreflexionsschranke mehrere Arbeitsbereiche, beispielsweise das Innere von beabstandet hintereinander gereihten Behältnissen, zu überwachen und gleichzeitig die jeweils dazwischen liegenden Bereiche zu ignorieren.

Eine weitere Ausführungsform der Erfindung sieht eine Benutzerschnittstelle zur Definition des mindestens einen Arbeitsbereiches vor.

Dadurch ist es möglich, über eine Benutzereingabe den Detektionsbereich der Mikrowellenschranke einzuschränken. Somit kann die Mikrowellenschranke leicht an neue Betriebsbedingungen angepasst werden. Auch eine automatische Errechnung günstiger Minimal- und Maximallaufzeiten ist denkbar.

Eine weitere Ausführungsform der Erfindung umfasst einen unbeweglichen Reflektor zur Reflexion des Mikrowellensignals als Reflektorecho, wobei die Steuereinheit dazu eingerichtet ist, das Schaltsignal nur auszugeben, falls während des Entstehens oder des Ansteigens der Amplitude des Echosignals gleichzeitig die Amplitude des Reflektorechos absinkt oder die Laufzeit des Reflektorechos ansteigt.

Ein solcher Reflektor (oder Gegenstellenreflektor) kann durch definiertes Vorsehen eines Reflektors (beispielsweise Corner, Metallplatte, ...) geschaffen werden, oder aber auch durch Vorhandensein einer entsprechend reflektierenden Fläche (beispielsweise ein Maschinengehäuse) implizit umgesetzt sein. Dadurch wird die Erkennungsgenauigkeit der Mikrowellenschranke weiter verbessert. Durch den Reflektor erhält die Steuereinheit ein zusätzliches Signal, nämlich das Reflektorecho. Die Amplitude des Reflektorechos sinkt ab, wenn sich ein Objekt irgendwo auf der Strecke von Mikrowellensender zum Reflektor oder zwischen Mikrowellenempfänger und Reflektor befindet, da dieses Objekt typischerweise Strahlungsleistung absorbiert. Gleichzeitig steigt typischerweise die Laufzeit des Reflektorechos, da das Objekt normalerweise einen höheren Brechindex aufweist und somit eine langsamere Lichtgeschwindigkeit erlaubt als die Luft oder das jeweilige ansonsten entlang der Strecke angeordnete Gas. Ein Schaltsignal wird dann nur ausgelöst, wenn während der Detektion des neu entstehenden oder ansteigenden Echosignals auch das Reflektorecho entsprechend an Intensität verliert oder sich nach hinten verschiebt oder beides. Die Verwendung alleine des Reflektorechos, ohne Beachtung des Echosignals das dem zu detektierenden Objekt zugeordnet ist, könnte hingegen zu der aus dem Stand der Technik bekannten fehlerhaften Detektion beispielsweise bei Verschmutzungen führen.

Diese Ausführungsform kann weiter verbessert werden, indem die Steuereinheit dazu ausgebildet ist, bei Inbetriebnahme das Reflektorecho zu identifizieren und den Arbeitsbereich als Bereich zwischen Mikrowellenempfänger und Reflektor zu definieren.

Während der Inbetriebnahme mag also vorteilhafterweise vorgesehen sein, dass die Mikrowellenschranke aktiv nach dem Vorhandensein eines Gegenstellenreflektors sucht. Dieser mag dadurch charakterisiert sein, das größte Echo bei Abwesenheit eines Detektionsobjektes zu erzeugen. Die Mikrowellenschranke setzt daraufhin standardmäßig einen Detektionsbereich von d1 = 0m bis d2 = Distanz zum Gegenstellenreflektor als Arbeitsbereich, beispielsweise durch Definition der entsprechenden Minimallaufzeit und Maximallaufzeit, und wechselt in einen Detektionsmodus wie oben beschrieben.

Zusätzlich kann vorgesehen sein, dass die Steuereinheit bei Absinken der Amplitude des Reflektorechos unter eine vordefinierte Minimalreflektorechoamplitude ein Warnsignal ausgibt. Es kann auch vorgesehen sein, dass ein Warnsignal nur dann ausgegeben wird, wenn die Laufzeit des Reflektorechos im Wesentlichen gleich einer Laufzeit während einer Inbetriebnahme der Mikrowellenschrankte ist.

Hierdurch kann auf sichere Art eine Verschmutzung der Mikrowellenschranke von einem tatsächlich im Übcrwachungsbcrcich vorhandenen Objekt unterschieden werden.

Dadurch wird die Zuverlässigkeit weiter erhöht. Beispielsweise durch die Definition einer Minimallaufzeit (also eines Mindestabstandes) kann wie geschildert erreicht werden, dass die Mikrowellenschranke keine Objekte im Nahbereich detektiert und irrtümlicherweise ein Schaltsignal auslöst. Würde nun dennoch ein Objekt im Nahbereich detektiert, so kann die Mikrowellenschranke anhand der Amplitude des Gegenstellenreflektors erkennen, ob ein Überwachen des eigentlichen Detektionsbereiches (des Arbeitsbereichs) noch möglich ist, oder ob der Sichtbereich der Mikrowellenschranke durch das Objekt im Nahbereich zu stark eingeschränkt wird. Ist eine hinreichend sichere Erkennung und Überwachung des Gegenstellenreflektors als solches nicht mehr möglich, so kann durch die vorgeschlagene Steuereinrichtung eine Warnmeldung abgegeben werden.

Gemäß einer Ausführungsform der Erfindung analysiert die Steuereinheit bei Empfang eines ersten Echosignals mit einer Laufzeit unterhalb der mindestens einen Minimallaufzeit und eines zweiten Echosignals mit einer Laufzeit oberhalb der mindestens einen Minimallaufzeit, ob das zweite Echosignal eine Reflexion des ersten Echosignals darstellt, und das Schaltsignal nur andernfalls ausgibt.

Der Vorteil davon gestaltet sich wie folgt. Es ist denkbar, dass Objekte im inaktiven Nahbereich, also außerhalb des Arbeitsbereichs, eine so starke Reflexion erzeugen, dass weitere Echos durch sogenanntes "Ping-Pong" der Mikrowellensignale entstehen, und so zu einem Ansteigen der Amplitude im aktiven, definierten Detektionsbereich (Arbeitsbereich) führen. Die Mikrowellenschranke würde dann fälschlicherweise trotz der Abwesenheit eines Objektes im Detektionsbereich ein Schaltsignal auslösen. Dabei sind verschiedenste Detektionsmethoden oder Varianten denkbar:
In einer Ausführungsform mag vorgesehen sein, ein anscheinend im Detektionsbereich vorhandenes Echo anhand seiner Entfernung (N * Distanz des Echos im Nahbereich) zu erkennen. Es wird also geprüft, ob die Laufzeit des zweiten Echosignals ein ganzzahliges Vielfaches der Laufzeit des ersten Echosignals ist.

Darüber hinaus kann ein Erkennen von Ping-Pong-Echos auch durch Auswerten der Reflexionsverhältnisse über einen gewissen Zeitraum erfolgen. So kann ein zeitgleiches Auftreten der Echos auf ein Ping-Pong-Verhältnis hindeuten.

Auch eine Erkennung anhand der Geschwindigkeit der Echosignale ist denkbar. Dabei wird geprüft, ob die zeitliche Veränderung der Laufzeit des zweiten Echosignals mit der zeitlichen Veränderung der Laufzeit des ersten Echosignals korreliert. Beispielsweise wäre ein Anzeichen für eine Mehrfachreflexion desselben Signals, dass sich die Laufzeit einer n-ten Reflexion mit der n-fachen Rate des originären Echosignals verändert. Diese Veränderung entspricht dabei der Geschwindigkeit eines sich entlang der Ausbreitungsrichtung des Mikrowellensignals bewegenden Objekts. Auch denkbar ist eine Überprüfung der Echosignale auf korrelierte Dopplerverschiebung, die bei einer solchen Bewegung auf Mehrfachreflexion hinweisen kann.

Eine Ausführungsform kann vorsehen, Mehrfachechos anhand deren Amplitude zu erkennen. Dabei würde geprüft, ob die Amplitude des zweiten Echosignals mit der Amplitude des ersten Echosignals zeitlich korreliert. Typischerweise würde eine solche Korrelation in einem linearen Zusammenhang bestehen.

Die Bewegung zweier Echos mag auch durch temporäres Wechseln der Modulationsform (beispielsweise Sägezahnmodulation zu Dreieckmodulation) ermittelt werden.

Eine weitere Ausführungsform sieht vor, dass die Abstrahlcharakteristik des Mikrowellensenders zwischen mindestens zwei Profilen umschaltbar ist und dass die Steuereinheit dazu eingerichtet ist, zu analysieren, ob das zweite Echosignal eine Reflexion des ersten Echosignals darstellt, indem sie die Abstrahlcharakteristik der Reflexionsmikrowellenschranke zwischen mindestens zwei Profilen umschaltet und prüft, ob währenddessen eine Korrelation zwischen dem ersten Echosignal und dem zweiten Echosignal besteht.

Ein Umschalten der Abstrahlcharakteristik mag beispielsweise eine Änderung der Amplitude und/oder eine Änderung des Abstrahlwinkels und/oder eine Änderung der Modulationsform und/oder eine Änderung einer Polarisation und/oder einer Polarisationsrichtung des Mikrowellensignals beinhalten.

Der Vorteil kann darin gesehen werden, dass durch vorzugsweise wiederholtes Umschalten der Abstrahlcharakteristik des Mikrowellensenders, oder der entsprechenden Antenne, zwischen verschiedenen Profilen das Objekt, welches ein Ping-Pong-Echo hervorruft, mit zeitlich wechselnder Intensität angestrahlt wird. Die Mehrfachreflexionen des Objekts zeigen dann, unabhängig von dem weiteren zeitlichen Verlauf der Abstrahlcharakteristik, einen Verlauf der von der Anzahl der Mehrfachreflexionen, nicht aber von der jeweiligen Abstrahlcharakteristik abhängt. Dadurch ist es möglich, die Ping-Pong-Echos von einmaligen Echos zu trennen. Gleiches lässt sich erreichen, wenn statt der Abstrahlcharakteristik, also der räumlichen Intensitätsverteilung des Mikrowellensignals, dessen Modulationsform verändert wird.

Eine weitere Verbesserung sieht vor, dass die Steuereinheit dazu eingerichtet ist, bei Inbetriebnahme statische Störechos zu speichern, zum anschließenden Entfernen der gespeicherten Störechos aus dem reflektierten Mikrowellensignal und/oder zum Berücksichtigen der gespeicherten Störechos während einer nachfolgenden Betriebsphase beim Auswerten einer Reflexion eines Mikrowellensignals.

Der Vorteil ist darin zu sehen, dass es möglich ist, durch ein Vergleichen der im Betrieb detektierten Echos mit den Echos einer zuvor erfassten Störechokurve statische Reflexionsstellen bei der Ermittlung eines Schaltübergangs unberücksichtigt zu lassen.

Eine besonders hervorzuhebende Ausführungsform der Erfindung sieht vor, die Reflexionsmikrowellenschranke in einem Stellwerk zur Detektion eines Schienenfahrzeugs in dem mindestens einen Arbeitsbereich zu verwenden. Das Mikrowellensignal wird dabei horizontal ausgesendet. Die beschriebenen Vorteile kommen hier besonders zur Geltung; so ist es Personal beispielsweise möglich, sich zwischen den Gleisen zu bewegen, ohne eine fehlerhafte Detektion auszulösen. Auch wird die Justage gegenüber klassischen Vorrichtungen in diesem Anwendungsgebiet vereinfacht, in denen Sender und Empfänger beispielsweise gegenüberliegend aufgebaut sind.

Im Folgenden werden mit Verweis auf die Figuren Ausführungsbeispiele der Erfindung beschrieben.

### Kurze Beschreibung der Figuren

Fig. 1 zeigt eine Reflexionsmikrowellenschranke gemäß einem Ausführungsbeispiel der Erfindung.
Fig. 2 zeigt eine Reflexionsmikrowellenschranke gemäß einem zweiten Ausführungsbeispiel der Erfindung.
Fig. 3 zeigt eine Reflexionsmikrowellenschranke gemäß einem dritten Ausführungsbeispiel der Erfindung.
Fig. 4a zeigt eine Reflexionsmikrowellenschranke gemäß einem vierten Ausführungsbeispiel der Erfindung.
Fig. 4b zeigt ein schematisches Intensität / Zeit-Diagramm von Echosignalen.
Fig. 5 zeigt eine Verwendung einer Reflexionsmikrowellenschranke in einem Stellwerk.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

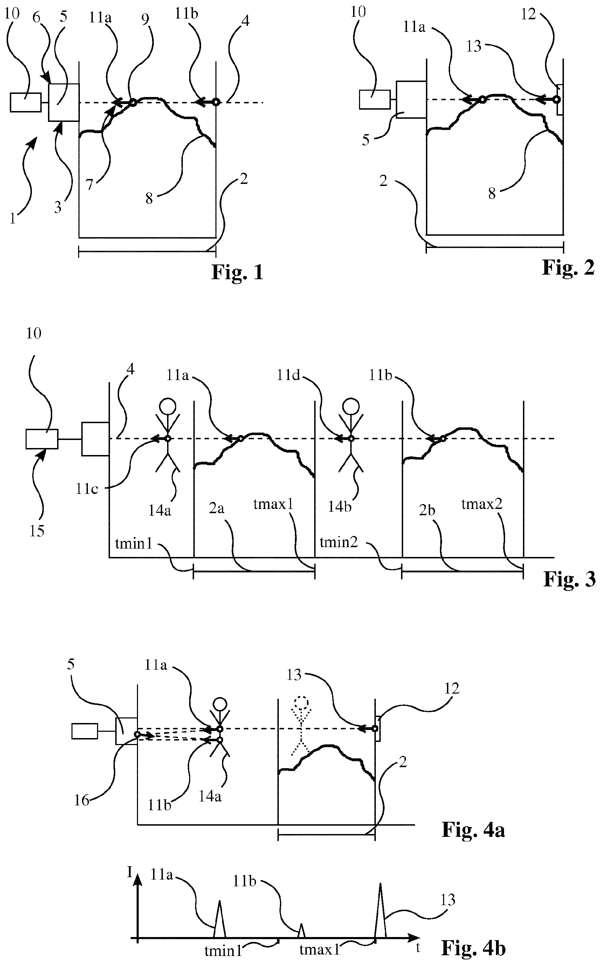

Fig. 1 zeigt eine Reflexionsmikrowellenschranke 1 gemäß einem Ausführungsbeispiel der Erfindung. Die Reflexionsmikrowellenschranke 1 zur Grenzstandüberwachung in einem Arbeitsbereich 2 umfasst einen Mikrowellensender 3, welcher kontinuierlich ein zeitlich moduliertes, nämlich frequenzmoduliertes (FMCW) und/oder amplitudenmoduliertes und/oder digital codiertes, Mikrowellensignal 4 aussendet. Der Mikrowellensender 3 ist in einem Bauteil mit einem Mikrowellenempfänger 5 als Mikrowellentransceiver 6 ausgebildet, wobei der Mikrowellenempfänger 5 eine Reflexion 7 des Mikrowellensignals 4 empfängt. Insbesondere ist der Mikrowellenempfänger 4 auf der gleichen Seite des zu überwachenden Arbeitsbereichs 2 angeordnet wie der Mikrowellensender 3.

Sobald ein zu detektierendes Füllgut 8 die Höhe des zu überwachenden Grenzstandes erreicht, wird das Mikrowcllcnsignal 4 an einem Ursprung 9 reflektiert und zum Mikrowellenempfänger 5 zurückgeworfen.

Ferner ist eine mit dem Mikrowellenempfänger 5 kommunizierende Steuereinheit 10 zur Detektion und Überwachung von Echosignalen 11a, 11b in der empfangenen Reflexion 7 des Mikrowellensignals 4 vorgesehen. Stellt die Steuereinheit 10 das Entstehen oder das Ansteigen der Amplitude eines Echosignals 11a fest, so berechnet sie dessen Laufzeit und überprüft, ob der Ursprung 9 des Echosignals 11a innerhalb des mindestens einen Arbeitsbereichs 2 liegt. Nur in diesem Fall wird dann das Schaltsignal auszugeben, welches das Erreichen oder Überschreiten des Grenzfüllstands anzeigt.

Diese Ausführungsform kommt insbesondere trotz der Anordnung von Mikrowellensender und Mikrowellenempfänger auf der gleichen Seite des Arbeitsbereichs ohne statischen Reflektor 12 - hier nicht weiter dargestellt - aus, da das Füllgut 8 selbst reflektierend wirkt.

Die Steuereinheit 10 speichert bei Inbetriebnahme statische Störechos in Form statischer Echosignale 11b, zum anschließenden Entfernen der gespeicherten Störechos aus dem reflektierten Mikrowellensignal 7. Somit kann beispielsweise das statische Echosignal 11b der Hinterwand des Füllgut 8 enthaltenden Behältnisses leicht ignoriert werden.

Gemäß Fig. 2 umfasst die Reflexionsmikrowellenschranke 1, zusätzlich zu den Merkmalen der Ausführungsform aus Fig. 1, einen unbeweglichen Reflektor 12 zur Reflexion des Mikrowellensignals 4 als Reflektorecho 13. Die Steuereinheit 10 ist dazu eingerichtet, das - bei Entstehen oder Ansteigen des, das Erreichen des Füllgrenzstandes indizierenden, Echosignals 11a abzugebende - Schaltsignal nur abzugeben, falls während des Entstehens oder des Ansteigens der Amplitude des Echosignals 11a gleichzeitig die Amplitude des Reflektorechos 13 absinkt und / oder die Laufzeit des Reflektorechos 13 ansteigt. Dabei wird ausgenutzt, dass das Füllgut 8 gleich in mehrfacher, synergetisch zusammenarbeitender Weise als Diagnostik wirkt, nämlich einerseits als Reflektor des Echosignals 11a und andererseits gleichzeitig als Dämpfer und Verzögerer des Reflektorechos 13.

Da aufgrund dieser Dämpfung, aber auch beispielsweise aufgrund von Verschmutzung, die Gefahr besteht, dass kein messbares oder sinnvoll interpretierbares Signal mehr beim Mikrowellenempfänger 5 ankommt, ist die Steuereinheit 10 zusätzlich dazu eingerichtet, bei Absinken der Amplitude des Reflektorechos 13 unter eine vordefinierte Minimalreflektorechoamplitude ein Warnsignal auszugeben.

Die Steuereinheit 10 ist ferner dazu ausgebildet, bei Inbetriebnahme automatisch das Reflektorecho 13 zu identifizieren, beispielsweise durch Identifikation eines statischen Echosignals mit der höchsten Intensität. Die Steuereinheit kann dann, vorzugsweise automatisch, den Arbeitsbereich 2 als Bereich zwischen Mikrowellenempfänger 5 und Reflektor 12 definieren.

Gemäß Fig. 3 sind zwei entlang einer Ausbreitungsrichtung des Mikrowellensignals 4 getrennte Arbeitsbereiche 2a, 2b vorgesehen. Dabei ist der erste Arbeitsbereich 2a durch eine erste vordefinierte Minimallaufzeit tmin1 und eine, dieser zugeordneten, erste vordefinierte Maximallaufzeit tmax1 definiert, und der zweite Arbeitsbereich durch eine zweite vordefinierte Minimallaufzeit tmin1 und eine zweite, dieser zugeordneten, vordefinierte Maximallaufzeit tmax1 definiert. Die Steuereinheit kann dabei zwischen einer Laufzeit und einem dieser Laufzeit zugeordneten Ort entlang der Ausbreitungsrichtung umrechnen, so dass die Definition einer Laufzeit äquivalent zu der Definition einer räumlichen Koordinate ist. In der gewählten Darstellung sind die Koordinaten markiert, die der jeweiligen Laufzeit entsprechen. Bei Detektion des Entstehens oder Ansteigens der Amplitude eines Echosignals 11a, 11b überprüft die Steuereinheit zunächst, ob die Laufzeit größer ist als eine vordefinierte Minimallaufzeit tmin1 beziehungsweise tmin2 und ob die Laufzeit kleiner ist als eine dieser Minimallaufzeit zugeordnete Maximallaufzeit tmax1 beziehungsweise tmax2. Nur einem solchen Fall wird das Schaltsignal ausgesendet. So können die Echosignale 11c, 11d der als Fremdkörper 14a, 14b wirkenden Personen leicht ignoriert werden.

Die Minimal- und Maximallaufzeiten tmin1, tmin2, tmax1, tmax2 werden dabei über eine Benutzerschnittstelle 15 eingegeben und in der Steuereinheit 10 hinterlegt, zur vereinfachten Anpassung der Detektionsroutinen an die durch die Behältnisse der Füllguter vorgegebene Geometrie.

Fig. 4a zeigt ein Ausführungsbeispiel der Erfindung, bei dem ein Arbeitsbereich 2 vorgesehen ist, der dem Intervall zwischen einer Minimallaufzeit tmin1 und der dieser zugeordneten Maximallaufzeit tmax1 entspricht. Fig. 4b zeigt ein entsprechendes Intensität / Zeit-Diagramm, in dem auftretende Echosignale 11a, 11b und ein Reflektorecho 13 schematisch eingezeichnet sind.

Die Maximallaufzeit tmax1 ist vordefiniert durch einen statischen Reflektor 12, der das Reflektorecho 13 zurückwirft. In einem zu ignorierenden Bereich zwischen einem Mikrowellenempfänger 5 und dem Minimalabstand, der der Minimallaufzeit tmin1 entspricht, befindet sich ein Fremdkörper 14a, welcher ein Echosignal 11a zu dem Mikrowellenempfänger 5 zurückwirft. Dieses Signal wird, da die Laufzeit desselben nicht größer ist als die Minimallaufzeit tmin1, nicht zum Ausgeben eines Schaltsignals führen. Allerdings wird das Echosignal 11a an einer Fläche 16 im Bereich des Mikrowellenempfängers 5 reflektiert und dann erneut von dem Fremdkörper 14a zum Mikrowellenempfänger 5 zurückgeworfen und als "Ping Pong" Echosignal 11b aufgenommen. Dieses "Ping Pong" Echosignal 11b weist eine Laufzeit auf, die zwischen der Minimallaufzeit tmin1 und der Maximallaufzeit tmax1 liegt, welche dem Echosignal eines - virtuellen, hier gestrichelt dargestellten - Fremdkörpers (oder eines Füllguts oberhalb des Grenzfüllstandes) im Arbeitsbereich 2 entspricht, und würde somit prinzipiell das Ausgeben eines Schaltsignals erlauben. Allerdings ist die Steuereinheit 10 dazu eingerichtet, bei Empfang des ersten Echosignals 11a mit einer Laufzeit unterhalb der mindestens einen Minimallaufzeit tmin1 und eines zweiten Echosignals 11b oberhalb der mindestens einen Minimallaufzeit tmin1 zu analysieren, ob das zweite Echosignal 1 1b eine Reflexion des ersten Echosignals 11a darstellt, und das Schaltsignal nur andernfalls auszugeben. Dies geschieht über eine Analyse einer Korrelation zwischen der Dopplerverschiebung beider Echosignale 11a, 11b und/oder zwischen deren Amplituden und/oder Abständen, die ganzzahlige Vielfache voneinander darstellen. Vorliegend hat diese Analyse ein positives Ergebnis, daher wird kein Schaltsignal ausgegeben.

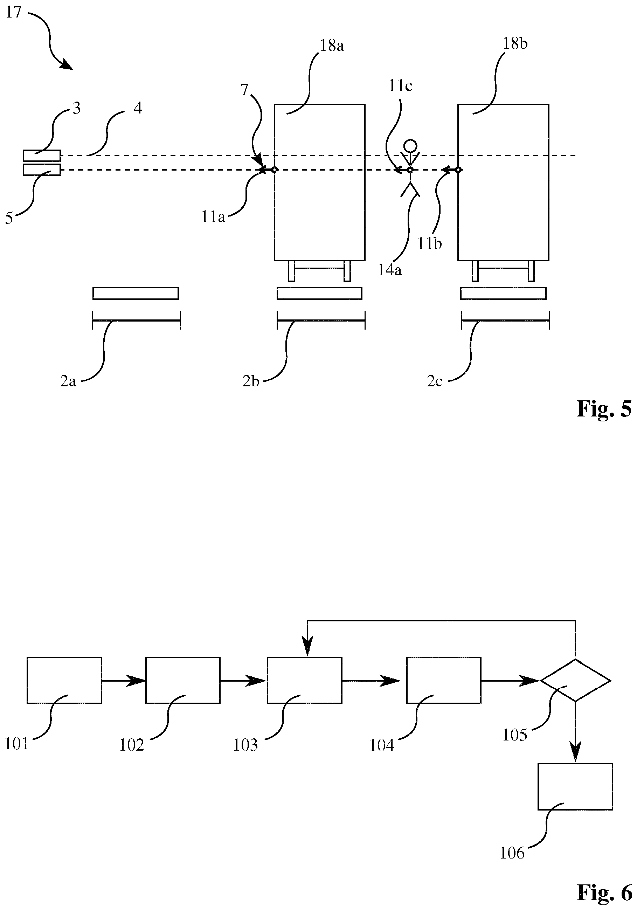

Gemäß Fig. 5 wird die erfindungsgemäße Reflexionsmikrowellenschranke 1 in einem Stellwerk 17 zur Detektion von Schienenfahrzeugen 18a, 18b verwendet. Dabei wird das Mikrowellensignal 4 von einem Mikrowellensender 3 ausgesendet und dessen Reflexion 7, die die Echosignale 11a, 11b, 11c enthält, von dem Mikrowellenempfänger 5 empfangen. Die Arbeitsbereiche 2a, 2b, 2c sind dabei derart vordefiniert, dass das Echosignal 11c eines Fremdkörpers 14a nicht als Indikator für ein dort angeordnetes Schienenfahrzeug gewertet werden kann.

Fig. 6 zeigt ein Flussdiagramm eines Verfahrens zur Grenzstandüberwachung gemäß einem Ausführungsbeispiel der Erfindung. In Schritt 101 wird kontinuierlich ein zeitlich moduliertes Mikrowellensignal ausgesendet. In Schritt 102 wird eine Reflexion des Mikrowellensignals empfangen. In Schritt 103 werden Echosignale - hier nicht weiter dargestellt - in der empfangenen Reflexion des Mikrowellensignals detektiert und überwacht. In Schritt 104 wird bei Entstehen oder bei Ansteigen der Amplitude eines detektierten oder überwachten Echosignals dessen Laufzeit berechnet. In Schritt 105 wird mittels der berechneten Laufzeit bestimmt, ob das Echosignal innerhalb mindestens eines Arbeitsbereichs reflektiert wurde. Dazu wird die Laufzeit beispielsweise mit einer Minimallaufzeit tmin1 oder beispielsweise mit einer Maximallaufzeit tmax1 verglichen. Nur in dem Falle, dass der Ursprung des Echosignals in dem mindestens einen Arbeitsbereich liegt, wird in Schritt 106 das Schaltsignal ausgegeben; andernfalls wird weiter gemäß Schritt 103 die Reflexion des Mikrowellensignals auf das Entstehen oder das Ansteigen von Echosignalen hin überwacht.

Die voranstehend ausgeführten Ausführungsbeispiele sind nicht als Einschränkungen zu verstehen. Es sind weitere Ausführungsformen möglich, die von den nachfolgenden Ansprüchen mit erfasst sind. So ist es beispielsweise möglich, die Reflexionsmikrowellenschranke unter Verwendung von hochintegrierten MMIC's aufzubauen, wobei in einer besonders vorteilhaften Ausgestaltung dieselben auch Elemente zum Aussenden und/oder Empfangen von Radarsignalen beinhalten können. Zur Verbesserung der Linearität eines nach dem FMCW-Prinzip arbeitenden MMIC's kann insbesondere eine Phase Locked Loop (PLL) oder eine Fractional-N-PLL Anwendung finden. Es mag auch vorgesehen sein, die Reflexionsmikrowellenschranke über eine Batterie und / oder über Einrichtungen zum Energy Harvesting zu betreiben. Hierzu mag die Mikrowellenschranke geeignete Energiemanagementeinheiten aufweisen, welche durch ein zeitliches Deaktivieren der Mikrowellenbaugruppe ein Ansammeln von Energie erreichen können. Es ist zudem möglich, den Schaltzustand und/oder die Änderung eines Schaltzustands drahtlos an eine übergeordnete Steuerung, z.B. eine SPS zu übertragen (beispielsweise mittels Bluetooth oder WLAN oder dergleichen). Die drahtlose Kommunikationseinrichtung mag auch zum Einstellen der Mikrowellenschranke vorgesehen sein.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ebenso ist beispielsweise wenn von der Überwachung von Echosignalen die Rede ist, auch denkbar, dass nur ein Echosignal überwacht wird. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- 2, 2a, 2b: Reflexionsmikrowellenschranke Arbeitsbereich
- 3: Mikrowellensender
- 4: Mikrowellensignal
- 5: Mikrowellenempfänger
- 6: Mikrowellentransceiver
- 7: Reflexion des Mikrowellensignals
- 8: Füllgut
- 9: Ursprung
- 10: Steuereinheit
- 11a-11c: Echosignal
- 12: Reflektor
- 13: Reflektorecho
- 14a, 14b: Fremdkörper
- 15: Benutzerschnittstelle
- 16: Fläche
- 17: Stellwerk
- 18a, 18b: Schienenfahrzeug
- 101-106: Verfahrensschritt

## Patentansprüche

1. Reflexionsmikrowellenschranke (1) zur Grenzstandüberwachung in mindestens einem Arbeitsbereich (2) durch Ausgabe eines Schaltsignals, umfassend
einen Mikrowellensender (3) zum kontinuierlichen Aussenden eines zeitlich modulierten Mikrowellensignals (4),
einen Mikrowellenempfänger (5), der auf der gleichen Seite des mindestens einen Arbeitsbereichs (2) entlang der Ausbreitungsrichtung des Mikrowellensignals angeordnet ist wie der Mikrowellensender (3), und zum Empfang einer Reflexion (7) des Mikrowellensignals (4),
eine mit dem Mikrowellenempfänger (5) kommunizierende Steuereinheit (10) zur Detektion und Überwachung von Echosignalen (11a-11c) in der empfangenen Reflexion (7) des Mikrowellensignals (4),
wobei die Steuereinheit (10) dazu eingerichtet ist,
die Laufzeit eines Echosignals (11a) beim Entstehen oder Ansteigen der Amplitude des Echosignals der Reflexion zu berechnen, mittels der berechneten Laufzeit zu bestimmen, ob der Ursprung (9) des Echosignals (11a) innerhalb des mindestens einen Arbeitsbereichs (2) liegt,
und nur in dem Falle, dass der Ursprung des Echosignals der Reflexion in dem mindestens einen Arbeitsbereich liegt, das Schaltsignal auszugeben,
**dadurch gekennzeichnet,**
**dass** die Steuereinheit dazu eingerichtet ist,
in dem Falle, dass der Ursprung (9) des Echosignals entlang der Ausbreitungsrichtung des Mikrowellensignals nicht innerhalb des mindestens einen Arbeitsbereichs liegt, das Echosignal der Reflexion eines Fremdkörpers bei einer Füllstanderkennung zu ignorieren.

2. Reflexionsmikrowellenschranke (1) nach Anspruch 1,
wobei die Steuereinheit (10) dazu eingerichtet ist, zu bestimmen, ob der Ursprung (9) des Echosignals (11a) innerhalb des mindestens einen Arbeitsbereichs (2) liegt, indem sie überprüft, ob die Laufzeit größer ist als mindestens eine vordefinierte Minimallaufzeit (tmin1).

3. Reflexionsmikrowellenschranke (1) nach einem der vorherigen Ansprüche,
wobei die Steuereinheit (10) dazu eingerichtet ist, zu bestimmen, ob der Ursprung des Echosignals (11a) innerhalb des mindestens einen Arbeitsbereichs (2) liegt, indem sie überprüft, ob die Laufzeit kleiner ist als mindestens eine vordefinierte Maximallaufzeit (tmax1).

4. Reflexionsmikrowellenschranke (1) nach den Ansprüchen 2 und 3, wobei mindestens zwei entlang einer Ausbreitungsrichtung des Mikrowellensignals (4) getrennte Arbeitsbereiche (2a, 2b) vorgesehen sind.

5. Reflexionsmikrowellenschranke (1) nach einem der vorherigen Ansprüche, umfassend eine Benutzerschnittstelle (15) zur Definition des mindestens einen Arbeitsbereiches (2).

6. Reflexionsmikrowellenschranke (1) nach einem der vorherigen Ansprüche, umfassend einen unbeweglichen Reflektor (12) zur Reflexion des Mikrowellensignals (4) als Reflektorecho (13),
wobei die Steuereinheit (10) dazu eingerichtet ist, das Schaltsignal nur auszugeben, falls während des Entstehens oder des Ansteigens der Amplitude des Echosignals (11a) gleichzeitig die Amplitude des Reflektorechos (13) absinkt und / oder die Laufzeit des Reflektorechos (13) ansteigt.

7. Reflexionsmikrowellenschranke (1) nach Anspruch 6, wobei die Steuereinheit (10) dazu ausgebildet ist, bei Inbetriebnahme das Reflektorecho (12) zu identifizieren und den Arbeitsbereich (2) als Bereich zwischen Mikrowellenempfänger (5) und Reflektor (12) zu definieren.

8. Reflexionsmikrowellenschranke (1) nach einem der Ansprüche 6 oder 7,
wobei die Steuereinheit (10) dazu eingerichtet ist, bei Absinken der Amplitude des Reflektorechos (11a) unter eine vordefinierte Minimalreflektorechoamplitude ein Warnsignal auszugeben.

9. Reflexionsmikrowellenschranke (1) nach Anspruch 2,
wobei die Steuereinheit (10) dazu eingerichtet ist, bei Empfang eines ersten Echosignals (11a) mit einer Laufzeit unterhalb der mindestens einen Minimallaufzeit (tmin1) und eines zweiten Echosignals (11b) oberhalb der mindestens einen Minimallaufzeit (tmin1) zu analysieren, ob das zweite Echosignal (11b) eine Reflexion des ersten Echosignals (11a) darstellt, und das Schaltsignal nur andernfalls auszugeben.

10. Reflexionsmikrowellenschranke (1) nach Anspruch 9,
wobei die Abstrahlcharakteristik des Mikrowellensenders (3) zwischen mindestens zwei Profilen umschaltbar ist und wobei die Steuereinheit (10) dazu eingerichtet ist, zu analysieren, ob das zweite Echosignal (11b) eine Reflexion des ersten Echosignals (11a) darstellt,
indem sie die Abstrahlcharakteristik der Reflexionsmikrowellenschranke (1) zwischen mindestens zwei Profilen umschaltet und prüft, ob währenddessen eine Korrelation zwischen dem ersten Echosignal (11a) und dem zweiten Echosignal (11b) besteht.

11. Reflexionsmikrowellenschranke (1) nach einem der vorherigen Ansprüche, wobei die Steuereinheit (10) dazu eingerichtet ist, bei Inbetriebnahme statische Störechos zu speichern, um die gespeicherten Störechos während einer nachfolgenden Betriebsphase beim Auswerten einer Reflexion (7) eines Mikrowellensignals (4) zu berücksichtigen.

12. Verfahren zur Grenzstandüberwachung in mindestens einem Arbeitsbereich (2) durch Ausgabe eines Schaltsignals mittels einer Reflexionsmikrowellenschranke (1), wobei kontinuierlich ein zeitlich moduliertes Mikrowellensignal (4) ausgesendet wird, und eine Reflexion (7) des Mikrowellensignals (4) empfangen wird, und Echosignale (11a, 11b) in der empfangenen Reflexion (7) des Mikrowellensignals (4) detektiert und überwacht werden, wobei die Laufzeit eines Echosignals (1 1a) beim Entstehen oder Ansteigen der Amplitude des Echosignals der Reflexion berechnet wird, und mittels der berechneten Laufzeit bestimmt wird, ob das Echosignal (11a) innerhalb des mindestens einen Arbeitsbereichs (2) reflektiert wurde, und nur in dem Falle, dass der Ursprung des Echosignals der Reflexion in dem mindestens einen Arbeitsbereich liegt, das Schaltsignal ausgegeben wird,
**dadurch gekennzeichnet,**
**dass** in dem Falle, dass der Ursprung (9) des Echosignals entlang der Ausbreitungsrichtung des Mikrowellensignals nicht innerhalb des mindestens einen Arbeitsbereichs liegt, das Echosignal der Reflexion eines Fremdkörpers bei einer Füllstanderkennung ignoriert wird.

13. Computerprogramm, umfassend Befehle, die bewirken, dass die Vorrichtung des Anspruchs 1 die Verfahrensschritte nach Anspruch 12 ausführt.

14. Computerlesbares Medium, auf dem das Computerprogramm nach Anspruch 13 gespeichert ist.

15. Verwendung einer Reflexionsmikrowellenschranke (1) nach einem der Ansprüche 1 bis 11 in einem Stellwerk (17) zur Detektion eines Schienenfahrzeugs (18a; 18b) in dem mindestens einen Arbeitsbereich (2).

## Claims

1. Reflection microwave barrier (1) for monitoring a limit level in at least one working area (2) by outputting a switching signal, comprising
a microwave transmitter (3) for continuously transmitting a time-modulated microwave signal (4),
a microwave receiver (5) arranged on the same side of the at least one working area (2) along the propagation direction of the microwave signal as the microwave transmitter (3), and for receiving a reflection (7) of the microwave signal (4),
a control unit (10) communicating with the microwave receiver (5) for detecting and monitoring echo signals (11a-11c) in the received reflection (7) of the microwave signal (4),
wherein the control unit (10) is configured
to calculate the time of flight of an echo signal (11a) when the amplitude of the echo signal of the reflection arises or increases, to determine by means of the calculated time of flight whether the origin (9) of the echo signal (11a) lies within the at least one working area (2),
and, only in case that the origin of the echo signal of the reflection lies within the at least one working area, to output the switching signal
**characterized in that** the control unit is configured to,
in case that the origin (9) of the echo signal along the propagation direction of the microwave signal does not lie within the at least one working area, to ignore the echo signal of the reflection of a foreign body during a fill level detection.

2. Reflection microwave barrier (1) according to claim 1,
wherein the control unit (10) is configured to determine whether the origin (9) of the echo signal (11a) lies within the at least one working area (2) by checking whether the time of flight is greater than at least one predefined minimum time of flight (tmin1).

3. Reflection microwave barrier (1) according to one of the preceding claims,
wherein the control unit (10) is configured to determine whether the origin (9) of the echo signal (11a) lies within the at least one working area (2) by checking whether the time of flight is smaller than at least one predefined maximum time of flight (tmax1).

4. Reflection microwave barrier (1) according to claim 2 und 3,
wherein at least two working areas (2a, 2b) separated along a propagation direction of the microwave signal (4) are provided.

5. Reflection microwave barrier (1) according to one of the preceding claims, comprising a user interface (15) for defining the at least one working area (2).

6. Reflection microwave barrier (1) according to one of the preceding claims, comprising a stationary reflector (12) for reflecting the microwave signal (4) as a reflector echo (13),
Wherein the control unit (10) is configured to output the switching signal only if, during the arising or the increase in the amplitude of the echo signal (11a), the amplitude of the reflector echo (13) simultaneously decreases and/or the time of flight of the reflector echo (13) increases.

7. Reflection microwave barrier (1) according to claim 6, wherein the control unit (10) is adapted to identify the reflector echo (12) during operating and to define the working area (2) as area between the microwave receiver (5) and the reflector (12).

8. Reflection microwave barrier (1) according to one of the claims 6 oder 7, wherein the control unit (10) is configured to output a warning signal when the amplitude of the reflector echo (11a) falls below a predefined minimum reflector echo amplitude.

9. Reflection microwave barrier (1) according to claim 2,
wherein the control unit (10) is configured to analyze, upon reception of a first echo signal (11a) with a time of flight below the at least one minimum time of flight (tmin1) and of a second echo signal (11b) above the at least one minimum time of flight (tmin1), whether the second echo signal (11b) represents a reflection of the first echo signal (11a), and to output the switching signal only if this is not the case.

10. Reflection microwave barrier (1) according to claim 9,
wherein the radiation characteristic of the microwave transmitter (3) is switchable between at least two profiles and wherein the control unit (10) is configured to analyze whether the second echo signal (11b) represents a reflection of the first echo signal (11a),
by switching the radiation characteristic of the reflection microwave barrier (1) between at least two profiles and checking whether a correlation between the first echo signal (11a) and the second echo signal (11b) exists during this.

11. Reflection microwave barrier (1) according to one of the preceding claims, wherein the control unit (10) is configured to store static interference echoes during operating, in order to consider the stored interference echoes during a subsequent operating phase when evaluating a reflection (7) of a microwave signal (4).

12. Method for monitoring a limit level in at least one working area (2) by outputting a switching signal by means of a reflection microwave barrier (1), wherein a time-modulated microwave signal (4) is continuously transmitted, and a reflection (7) of the microwave signal (4) is received, and echo signals (11a, 11b) in the received reflection (7) of the microwave signal (4) are detected and monitored, wherein the time of flight of an echo signal (11a) is calculated when the amplitude of the echo signal of the reflection arises or increases, and, by means of the calculated time of flight, it is determined whether the echo signal (11a) has been reflected within the at least one working area (2), and, only in case that the origin of the echo signal of the reflection lies in the at least one working area, the switching signal is outputted,
**characterized in that**,
in case that the origin (9) of the echo signal along the propagation direction of the microwave signal does not lie within the at least one working area, the echo signal of the reflection of a foreign body is ignored in a level detection.

13. Computer program comprising instructions, which cause the apparatus of claim 1 to perform the method of claim 12.

14. Computer-readable medium on which the computer program of claim 13 is stored.

15. Use of a reflection microwave barrier (1) according to one of claims 1 to 11 in an interlocking center (17) for detecting a rail vehicle (18a; 18b) in the at least one working area (2).

## Revendications

1. Barrière hyperfréquence de réflexion (1) pour la surveillance d'un niveau limite dans au moins une zone de travail (2) en générant un signal de commutation, comprenant :
un émetteur hyperfréquence (3) pour émettre en continu un signal hyperfréquence (4) modulé dans le temps,
un récepteur hyperfréquence (5), qui est agencé du même côté de la au moins une zone de travail (2) le long d'une direction de propagation du signal hyperfréquence que l'émetteur hyperfréquence (3), et destiné à recevoir une réflexion (7) du signal hyperfréquence (4),
une unité de commande (10) qui communique avec le récepteur hyperfréquence (5) pour détecter et surveiller des signaux d'écho (11a-11c) dans la réflexion (7) reçue du signal hyperfréquence (4),
dans laquelle l'unité de commande (10) est configurée pour calculer le temps de propagation d'un signal d'écho (11a) lors de l'apparition ou de l'augmentation de l'amplitude du signal d'écho de la réflexion et déterminer, au moyen du temps de propagation calculé, si l'origine (9) du signal d'écho (11a) se situe dans la au moins une zone de travail (2),
et délivrer le signal de commutation uniquement dans le cas où l'origine du signal d'écho de la réflexion se situe dans la au moins une zone de travail,
**caractérisée en ce que** l'unité de commande est en outre configurée pour
dans le cas où l'origine (9) du signal d'écho le long de la direction de propagation du signal hyperfréquence ne se situe pas dans la au moins une zone de travail, ignorer le signal d'écho de la réflexion d'un corps étranger lors d'une détection d'un niveau de remplissage.

2. Barrière hyperfréquence de réflexion (1) selon la revendication 1,
dans laquelle l'unité de commande (10) est configurée pour déterminer si l'origine (9) du signal d'écho (11a) se situe dans la au moins une zone de travail (2), en vérifiant si le temps de propagation est supérieur à au moins un temps de propagation minimal (tmin1) prédéfini.

3. Barrière hyperfréquence de réflexion (1) selon l'une des revendications précédentes,
dans laquelle l'unité de commande (10) est configurée pour déterminer si l'origine du signal d'écho (11a) se situe dans la au moins une zone de travail (2), en vérifiant si le temps de propagation est inférieur à au moins un temps de propagation maximal (tmax1) prédéfini.

4. Barrière hyperfréquence de réflexion (1) selon les revendications 2 et (3),
dans laquelle sont prévues au moins deux zones de travail (2a, 2b) séparées le long d'une direction de propagation du signal hyperfréquence (4).

5. Barrière hyperfréquence de réflexion (1) selon l'une des revendications précédentes, comprenant une interface utilisateur (15) pour définir la au moins une zone de travail (2).

6. Barrière hyperfréquence de réflexion (1) selon l'une des revendications précédentes, comprenant un réflecteur immobile (12) pour la réflexion du signal hyperfréquence (4) sous forme d'écho de réflecteur (13),
dans laquelle l'unité de commande (10) est configurée pour générer le signal de commutation uniquement si, pendant l'apparition ou l'augmentation de l'amplitude du signal d'écho (11a), l'amplitude de l'écho de réflecteur (13) diminue et/ou le temps de propagation de l'écho de réflecteur (13) augmente simultanément.

7. Barrière hyperfréquence de réflexion (1) selon la revendication 6, dans laquelle l'unité de commande (10) est configurée pour identifier l'écho de réflecteur (12) pendant la mise en service et définir la zone de travail (2) comme étant une zone entre le récepteur hyperfréquence (5) et le réflecteur (12).

8. Barrière hyperfréquence de réflexion (1) selon l'une des revendications 6 ou 7,
dans laquelle l'unité de commande (10) est configurée pour générer un signal d'avertissement lorsque l'amplitude de l'écho de réflecteur (11a) diminue en dessous d'une amplitude d'écho de réflecteur minimale prédéfinie.

9. Barrière hyperfréquence de réflexion (1) selon la revendication 2,
dans laquelle l'unité de commande (10) est configurée pour analyser, lors de la réception d'un premier signal d'écho (11a) ayant un temps de propagation inférieur au au moins un temps de propagation minimal (tmin1) et d'un second signal d'écho (11b) ayant un temps de propagation supérieur au au moins un temps de propagation minimal (tmin1), si le second signal d'écho (11b) représente une réflexion du premier signal d'écho (11a), et sinon générer uniquement le signal de commutation.

10. Barrière hyperfréquence de réflexion (1) selon la revendication 9,
dans laquelle la caractéristique d'émission de l'émetteur hyperfréquence (3) peut être commutée entre au moins deux profils et dans laquelle l'unité de commande (10) est configurée pour analyser si le second signal d'écho (11b) représente une réflexion du premier signal d'écho (11a), en commutant la caractéristique d'émission de la barrière hyperfréquence de réflexion (1) entre au moins deux profils et en vérifiant si, pendant ce temps, il existe une corrélation entre le premier signal d'écho (11a) et le second signal d'écho (11b).

11. Barrière hyperfréquence de réflexion (1) selon l'une des revendications précédentes, dans laquelle l'unité de commande (10) est configurée pour enregistrer des échos parasites statiques pendant la mise en service, afin de tenir compte des échos parasites enregistrés pendant une phase de fonctionnement ultérieure lors de l'évaluation d'une réflexion (7) d'un signal hyperfréquence (4).

12. Procédé pour surveiller un niveau limite dans au moins une zone de travail (2) en générant un signal de commutation au moyen d'une barrière hyperfréquence de réflexion (1), dans lequel un signal hyperfréquence (4) modulé dans le temps est émis en continu, et une réflexion (7) du signal hyperfréquence (4) est reçue, et des signaux d'écho (11a, 11b) dans la réflexion (7) reçue du signal hyperfréquence (4) sont détectés et surveillés, dans lequel le temps de propagation d'un signal d'écho (11a) lors de l'apparition ou de l'augmentation de l'amplitude du signal d'écho de la réflexion est calculé, et au moyen du temps de propagation calculé, il est déterminé si le signal d'écho (11a) a été réfléchi dans la au moins une zone de travail (2) et uniquement dans le cas où l'origine du signal d'écho de la réflexion se situe dans la au moins une zone de travail, le signal de commutation est généré,
**caractérisé en ce que**
dans le cas où l'origine (9) du signal d'écho le long de la direction de propagation du signal hyperfréquence ne se situe pas dans la au moins une zone de travail, le signal d'écho de la réflexion d'un corps étranger est ignoré lors de la détection d'un niveau de remplissage.

13. Programme informatique comportant des instructions qui amènent le dispositif de la revendication 1 à exécuter les étapes de procédé selon la revendication 12.

14. Support lisible par ordinateur sur lequel est mémorisé le programme informatique selon la revendication 13.

15. Utilisation d'une barrière hyperfréquence de réflexion (1) selon l'une des revendications 1 à 11 dans un poste de commande (17) pour la détection d'un véhicule ferroviaire (18a ; 18b) dans au moins une zone de travail (2).
